Europäisches Patentamt

European Patent Office

Office européen des brevets

(19)

(11) Numéro de publication: **0 248 687**
**B1**

(12) **FASCICULE DE BREVET EUROPEEN**

(45) Date de publication du fascicule du brevet:
**05.09.90**

(21) Numéro de dépôt: **87400978.0**

(22) Date de dépôt: **29.04.87**

(51) Int. Cl.⁵: **H04N 5/335**

(54) Senseur opto-électronique multichamp à transfert de charges.

(30) Priorité: **02.05.86 FR 8606399**

(43) Date de publication de la demande:
**09.12.87 Bulletin 87/50**

(45) Mention de la délivrance du brevet:
**05.09.90 Bulletin 90/36**

(84) Etats contractants désignés:
**CH DE ES GB IT LI NL SE**

(56) Documents cités:
**GB-A- 2 151 878**
**GB-A- 2 159 679**
**US-A- 3 612 764**
**US-A- 3 784 738**

(73) Titulaire: **AEROSPATIALE SOCIETE NATIONALE INDUSTRIELLE Société Anonyme dite:, 37, Boulevard de Montmorency, F-75016 Paris(FR)**

(72) Inventeur: **Grenier, Gilles, 19 Allée du Parc de la Bièvre, F-94240 l'Hay-les-Roses(FR)**
Inventeur: **Berthier, Sylvain, 7, rue Jules Massenet, F-77140 Nemours(FR)**

(74) Mandataire: **Bonnetat, Christian et al, CABINET BONNETAT 23, Rue de Léningrad, F-75008 Paris(FR)**

ACTORUM AG

## Description

La présente invention concerne un senseur opto-électronique à transfert de charges, du type généralement désigné sous le nom de senseur CCD.

On connaît déjà des senseurs opto-électroniques de ce type, qui sont constitués par :
- un système optique chargé de former des images optiques ;
- un détecteur matriciel photosensible à transfert de charges comprenant :
  . une zone photosensible, constituée d'une pluralité de lignes d'éléments photosensibles éclairés par ledit système optique et formant des images électriques par intégration des charges électriques engendrées par les photons reçus par lesdits éléments photosensibles ;
  . une zone de mémoire intermédiaire dans laquelle sont transférées lesdites images contenues dans ladite zone photosensible ; et
  . un registre de lecture dans lequel sont transférées lesdites images de la zone de mémoire intermédiaire, ledit registre de lecture engendrant un signal vidéo série représentatif des images optiques reçues par ladite zone photosensible ;
- des moyens de mémoire extérieurs audit détecteur matriciel ; et
- un séquenceur commandant l'acquisition desdites images électriques par ladite zone photosensible et susceptible de régir les transferts d'image entre ladite zone photosensible et ladite zone de mémoire intermédiaire, entre ladite zone de mémoire intermédiaire et ledit registre de lecture et entre ledit registre de lecture et lesdits moyens de mémoire extérieurs.

Dans ces senseurs connus, à chaque fois, une image unique est formée sur la totalité de ladite zone photosensible, puis transférée dans ladite zone de mémoire intermédiaire, lue ensuite par ledit registre de lecture, et enfin stockée dans lesdits moyens de mémoire extérieurs.

Ainsi, la fréquence de prise des images est limitée par le temps de lecture desdits senseurs ; en effet, une image ne peut être prise qu'après la fin de la lecture de l'image précédente.

Or, il serait avantageux, pour certaines utilisations de tels senseurs, de pouvoir prendre au moins deux images simultanément.

Aussi, l'objet de la présente invention est-il de réaliser un senseur optique à transfert de charges permettant la prise de plusieurs images simultanées.

A cette fin, selon l'invention, le senseur optique du type décrit ci-dessus est remarquable :
- en ce que ledit système optique est multiple et est susceptible de former sur ladite zone photosensible une pluralité d'images juxtaposées appartenant à des champs optiques différents et/ou superposés ; et
- en ce que ledit séquenceur :
  . commande l'acquisition simultanée par ladite zone photosensible de ladite pluralité d'images ;
  . commande le transfert de ladite pluralité d'images ainsi acquises de ladite zone photosensible dans ladite zone de mémoire intermédiaire, puis, par l'intermédiaire dudit registre de lecture, le transfert de ladite pluralité d'images de ladite zone de mémoire intermédiaire dans lesdits moyens de mémoire extérieurs ; et
  . commande la répartition desdites images dans lesdits moyens de mémoire extérieurs.

Ainsi, la présente invention permet la réalisation d'un senseur opto-électronique à transfert de charges (CCD) susceptible de prendre deux ou plusieurs images simultanées, dont la prise est suivie d'une mémorisation commune dans ladite zone de mémoire intermédiaire, dans l'attente d'une lecture différée. La séparation de ces images est réalisée lors de la lecture par ledit registre, au moment de la mémorisation dans lesdits moyens de mémoire extérieurs, destinés à permettre un traitement ultérieur desdites images.

Ainsi, grâce à l'invention, on a la possibilité d'obtenir, avec un même détecteur, deux images parfaitement synchronisées, mais issues de voies optiques différentes et susceptibles d'être traitées différemment. Les applications d'un tel système sont nombreuses. A titre d'exemples, on peut citer ;
- la poursuite multi-spectrale d'un corps chaud. Le même détecteur étant utilisé, il devient particulièrement aisé de focaliser des champs de caractéristiques identiques, hormis la bande spectrale. On peut ainsi former deux images identiques, mais représentatives de deux sous-bandes de la bande spectrale de repère du détecteur, ce qui permet de déterminer ainsi la température apparente des objets observés.
- l'écartométrie multi-champs d'un missile.

Le guidage d'un missile nécessite la prise en charge de celui-ci dans un champ étendu et le guidage précis dans un champ étroit. L'utilisation du dispositif selon l'invention permet d'éviter les solutions habituellement retenues :
  . système d'écartométrie à deux champs focalisés sur deux detecteurs différents,
  . système d'écartométrie à deux champs superposés sur le même détecteur et séparés par un volet obturateur, qui ne permettent pas de réaliser simultanément la poursuite du missile dans les deux champs.
- l'écartométrie d'un missile et la poursuite d'une cible.

Le guidage de missile en alignement nécessite la connaissance simultanée de la position du missile et de la cible. L'utilisation du dispositif selon l'invention permet d'acquérir deux images parfaitement synchronisées et de réaliser une écartométrie différentielle cible - missile.

Dans un mode de réalisation avantageux, le senseur opto-électronique conforme à la présente invention comporte une unité de traitement extérieure, incorporant lesdits moyens de mémoire extérieurs et engendrant les paramètres d'acquisition desdites images, paramètres que ladite unité de traitement extérieure adresse audit séquenceur. Ces paramètres d'acquisition des images sont par exemple la durée d'exposition pour chaque image, la synchronisation des prises des images, la synchronisation de la lecture de la zone intermédiaire, etc... Ils peuvent concerner également la validation d'une zone particulière d'une image par le séquenceur, afin de limiter le nombre des points images à mémoriser et à traiter.

Les figures du dessins annexé feront bien comprendre comment l'invention peut être réalisée. Sur ces figures, des références identiques désignent des éléments semblables.

La figure 1 est le schéma synoptique d'un exemple de réalisation du senseur optique à transfert de charges conforme à l'invention, destiné à la prise de deux images simultanées.

La figure 2 est un chronogramme schématique partiel du fonctionnement du senseur optique de la figure 1.

Les figures 3a à 3e illustrent schématiquement l'état du détecteur matriciel à transfert de charges du senseur optique de la figure 1, à plusieurs instants du chronogramme de la figure 2.

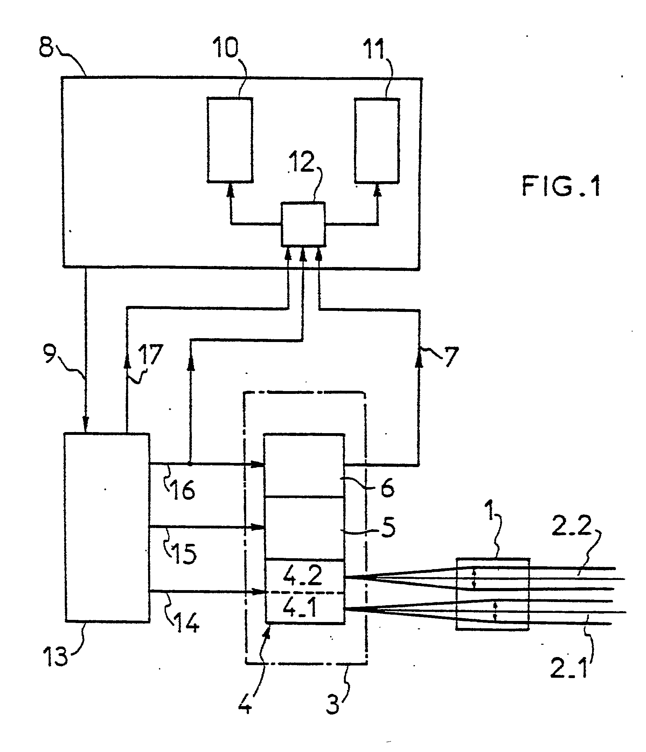

Le senseur optique à transfert de charges, conforme à l'invention et montré schématiquement sur la figure 1, est constitué par :
- un double système optique 1, recevant deux faisceaux lumineux 2.1 et 2.2 en provenance de deux objets (non représentés) et susceptible de former une image optique de chacun desdits objets. Lesdits objets peuvent être superposés, proches ou éloignés l'un de l'autre. Dans les deux premiers cas, les faisceaux 2.1 et 2.2 sont au moins sensiblement parallèles l'un à l'autre, alors que dans le dernier ils sont concourants. Le système optique 1 est constitué de façon usuelle de lentilles, miroirs, etc...
- un détecteur matriciel photosensible 3 à transfert de charges, du type CCD, lui-même formé par :
. une zone photosensible 4, qui est constituée d'une pluralité de lignes d'éléments photosensibles et qui est fictivement subdivisée en deux régions 4.1 et 4.2. Sur la région 4.1, une partie du système optique 1 forme l'image I1 du premier objet par focalisation du faisceau 2.1 De même, sur la région 4.2, l'autre partie du système optique 1 forme l'image I2 du second objet par focalisation du faisceau 2.2. Cette zone photosensible 4 est apte à intégrer les charges électriques engendrées par les photons desdites images pour engendrer des informations d'image sous forme électrique ;
. une zone de mémoire intermédiaire 5, qui est constituée d'une pluralité de lignes d'éléments de mémoire et dans laquelle sont transférées ligne à ligne lesdites informations électriques d'image contenues dans les lignes de ladite zone photosensible 4 ; et
. un registre de lecture 6, dans lequel les informations électriques d'image correspondant à chaque ligne de la zone de mémoire intermédiaire 5 sont transférées en parallèle, ledit registre de lecture 6 engendrant, à sa sortie 7, un signal vidéo représentatif des images reçues du système optique 1 par les régions 4.1 et 4.2 de la zone photosensible 4 ;
- une unité de traitement 8, extérieure audit détecteur matriciel 3 et engendrant, à sa sortie 9, les paramètres définissant l'acquisition des images, tels que durée d'exposition des images, synchronisation des prises des images, synchronisation de la lecture, etc... ;
- deux mémoires 10 et 11 dont l'accès est commandé par un dispositif de commande commun 12. Les mémoires 10 et 11 et le dispositif 12 sont extérieurs au détecteur matriciel 3 et sont avantageusement incorporés à l'unité de traitement 8 ; et
- un séquenceur 13 recevant de la sortie 9 de l'unité de traitement 8 lesdits paramètres d'acquisition des images et chargé de commander la prise d'images par les régions photosensibles 4.1 et 4.2 et de régir les transferts d'informations.

A cet effet, le séquenceur 13 comporte notamment :
. une sortie 14 sur laquelle apparaît un signal adressé à la zone photosensible 4 et destiné à faire progresser ligne par ligne les informations électriques d'image à l'intérieur de ladite zone photosensible 4 en direction de la zone de mémoire intermédiaire 5 ;
. une sortie 15 sur laquelle apparaît un signal adressé à la zone de mémoire intermédiaire 5 et destiné à faire progresser ligne par ligne les informations électriques d'image à l'intérieur de ladite zone de mémoire intermédiaire 5 en direction dudit registre de lecture 6 ;
. une sortie 16 sur laquelle apparaît un signal adressé au registre de lecture 6 et destiné à commander celui-ci pour qu'il adresse aux mémoires 10 et 11, par l'intermédiaire de sa sortie 7 et du dispositif de commande 12, un signal vidéo série à partir des informations parallèles qu'il reçoit de la zone de mémoire intermédiaire 5. Par ailleurs, la sortie 16 est également reliée audit dispositif de commande 12 desdites mémoires 10 et 11 ; et
. une sortie 17 sur laquelle apparaît un signal de validation adressé audit dispositif de commande 12.

Chacun des signaux apparaissant aux sorties 14,15 et 16 du séquenceur 13 est constitué d'une suite d'impulsions de fréquence constante, chaque impulsion correspondant à un passage d'une ligne à la suivante (pour les zones 4 et 5) ou à la transformation d'une ligne parallèle en une ligne série (pour le registre de lecture 6).

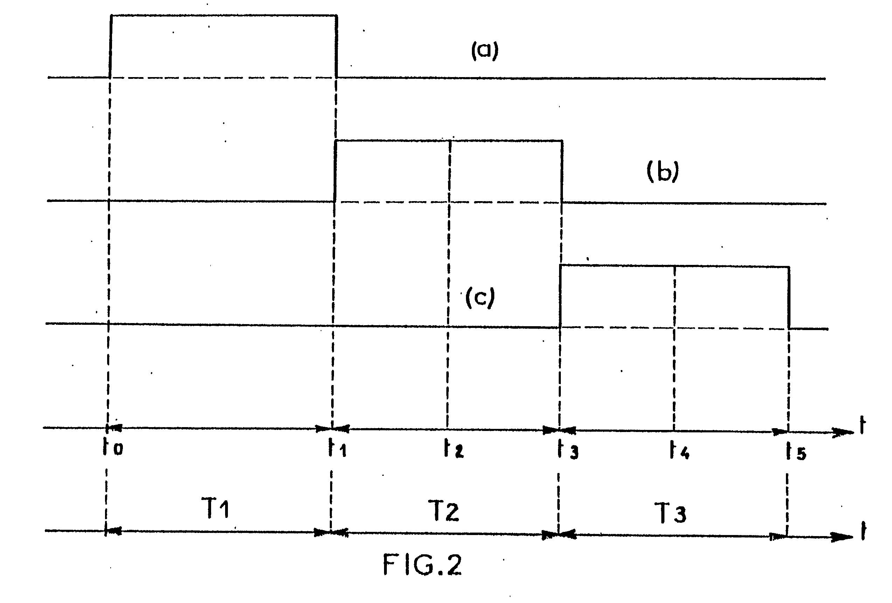

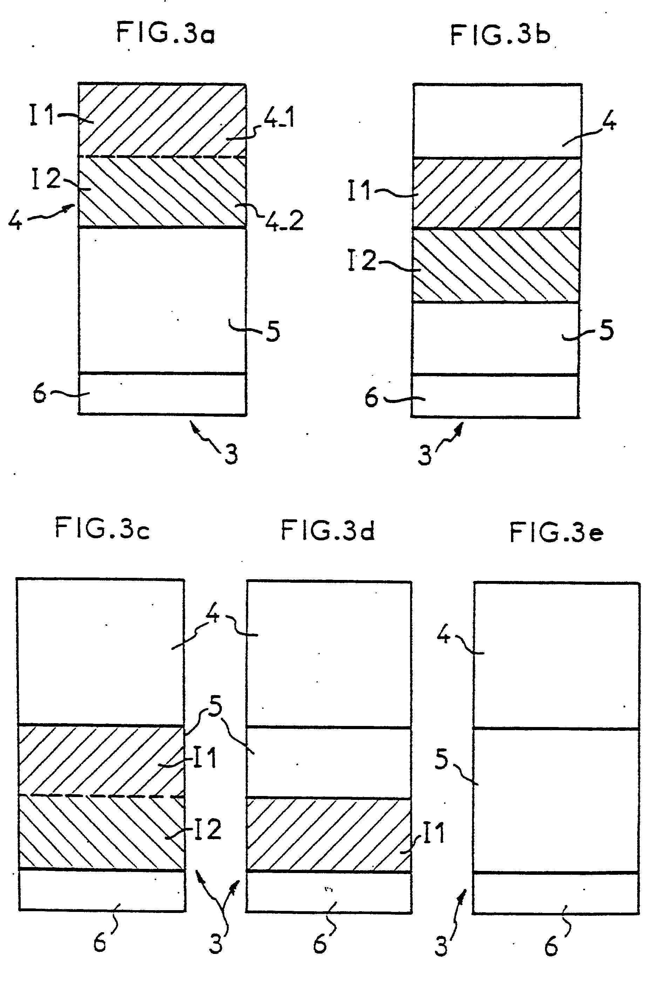

Le fonctionnement du senseur conforme à l'invention est expliqué ci-après, à l'aide du chronogramme de la figure 2 et des schémas des figures 3a à 3e.

Ce fonctionnement comporte trois phases principales, respectivement référencées T1 à T3 sur le chronogramme de la figure 2.

A) Phase T1

Cette première phase s'étend de l'instant initial t0 à un instant t1 et elle correspond à la prise simultanée des images I1 et I2. Elle est plus particulièrement illustrée par le diagramme (a) de la figure 2.

Au début de cette première phase, c'est-à-dire à l'instant t0, on suppose que la zone photosensible 4 est entièrement vidée des informations qu'elle contenait antérieurement. Pendant cette première phase, le séquenceur 13 émet des signaux à ses sorties 15 et 16, mais n'émet aucun signal sur sa sortie 14. Par suite :
- le vidage de la zone de mémoire intermédiaire 5 est en cours ;
- il se forme, respectivement sur les régions 4.1 et 4.2 de la zone photosensible 4, des images I1 et I2 intégrées pendant l'intervalle de temps t1-t0 et recouvrant la totalité de chacune desdites régions de la zone photosensible 4.

A la fin de cette première phase T1, c'est-à-dire à l'instant t1, la zone de mémoire intermédiaire 5 est complètement vidée, alors que la zone photosensible 4 comporte deux images juxtaposées I1 et I2, intégrées respectivement dans les régions 4.1 et 4.2. La figure 3a illustre schématiquement l'état du détecteur 3 à l'instant t1.

B) Phase T2

Cette seconde phase s'étend de l'instant t1 à un instant postérieur t3 et elle correspond à la mémorisation des images I1 et I2 dans la zone de mémoire intermédiaire 5. Elle est plus particulièrement illustrée par le schéma (b) de la figure 2 et elle se subdivise en deux étapes consécutives, à savoir :

. une première étape s'étendant dudit instant t1 à un instant postérieur t2 et pendant laquelle le séquenceur 13 émet un signal à ses sorties 14 et 15, sans émettre sur sa sortie 16. Par suite, les lignes de la région 4.2 de la zone photosensible 4 correspondant à l'image I2 sont avancées pas-à-pas en direction de la zone de mémoire intermédiaire 5 et y pénètrent. L'image I1 est elle-même avancée en direction de la zone de mémoire intermédiaire 5. Le transfert des lignes de l'image I2 est terminé à l'instant t2 et alors l'image I1 est venue en position adjacente à la zone de mémoire intermédiaire 5, en restant disposée dans la zone photosensible 4.

La figure 3b illustre l'état du détecteur 3 à cet instant t2.

. une seconde étape s'étendant de l'instant t2 à l'instant t3 auquel se termine ladite phase T2. Pendant cette seconde étape, le séquenceur 13 continue d'émettre un signal à ses sorties 14 et 15, mais aucun signal n'apparaît sur sa sortie 16. Par suite, les lignes de la zone photosensible 4 correspondant à l'image I1 sont transférées en direction de la zone de mémoire iintermédiaire 5.

Le transfert de l'image I1 en direction de la zone de mémoire intermédiaire 5 est terminé à l'instant t3. La figure 3c illustre l'état du détecteur 3 à l'instant t3.

c) Phase T3

La troisième phase T3, plus particulièrement illustrée par le diagramme (c) de la figure 2, s'étend de l'instant t3 à un instant t5 postérieur et correspond à la lecture du contenu de la zone de mémoire intermédiaire 5 par le registre de lecture 6. Pendant cette phase T3, le séquenceur 13 émet des signaux sur ses sorties 15 et 16 de sorte que lesdites images I1 et I1 sont avancées vers le registre 6, puis transférées dans celui-ci, qui les adresse, par sa sortie 7, vers les mémoires 10 et 11. Grâce à la liaison entre la sortie 16 du séquenceur 13 et le dispositif de commande 12, le signal vidéo à ladite sortie 7 du registre de lecture 6 est échantillonné et synchronisé par le signal de lecture apparaissant à la sortie 16. Par ailleurs, le signal de validation, émis par le séquenceur 13 sur sa sortie 17 et adressé au dispositif de commande 12, permet la séparation des deux images

I1 et I2, de sorte que l'une, par exemple I1, peut être stockée dans la mémoire 10, tandis que l'autre, par exemple I2, peut être emmagasinée dans la mémoire 11.

Cette troisième phase T3 se subdivise en deux étapes s'étendant respectivement de l'instant t3 à un instant t4, et de cet instant t4 à l'instant t5.

La première étape correspond à la lecture de l'image I2, qui est terminée à l'intant t4. Comme l'illustre schématiquement la figure 3d, l'image I1 est alors venue dans une position adjacente au registre 6.

Pendant la seconde étape, le registre 6 lit l'image I1 et, à l'instant t5, une telle lecture est terminée (voir la figure 3e).

A la fin de la phase T3, c'est-à-dire à l'instant t5, la mise en mémoire des images partielles I1 et I2 est donc terminée.

Les images I1 et I2 sont alors mémorisées dans les mémoires 10 et 11 dans l'attente d'une exploitation ultérieure.

On voit ainsi que, grâce à l'invention, on réalise un senseur optique permettant de réaliser deux images simultanées. Bien entendu, le fonctionnement du senseur peut être cyclique, avec prise et stockage de deux images à chaque cycle.

**Revendications**

1 - Senseur opto-électronique à transfert de charges, comprenant :
- un système optique (1) chargé de former des images optiques ;
- un détecteur matriciel photosensible à transfert de charges (3) comprenant :
. une zone photosensible (4), constituée d'une pluralité de lignes d'éléments photosensibles éclairés par ledit système optique (1) et formant des images électriques par intégration des charges électriques engendrées par les photons reçus par lesdits éléments photosensibles ;
. une zone de mémoire intermédiaire (5), dans laquelle sont transférées lesdites images contenues dans ladite zone photosensible (4) ; et
. un registre de lecture (6) dans lequel sont transférées lesdites images de la zone de mémoire intermédiaire (5), ledit registre de lecture (6) engendrant un signal vidéo série représentatif des images optiques reçues par ladite zone photosensible ;
- des moyens de mémoire (10, 11) extérieurs audit détecteur matriciel (3) et
- un séquenceur (13) commandant l'acquisition desdites images électriques par ladite zone photosensible (4) et susceptible de régir les transferts d'images entre ladite zone photosensible (4) et ladite zone de mémoire intermédiaire (5), entre ladite zone de mémoire intermédiaire (5) et ledit registre de lecture (6) et entre ledit registre de lecture (6) et lesdits moyens de mémoire (10, 11),
caractérisé :
- en ce que ledit système optique (1) est multiple et est susceptible de former sur ladite zone photosensible (4) une pluralité d'images juxtaposées appartenant à des champs optiques différents et/ou superposés ; et

- en ce que ledit séquenceur (13) :
. commande l'acquisition simultanée par ladite zone photosensible (4) de ladite pluralité d'images ;
. commande le transfert de ladite pluralité d'images ainsi acquises de ladite zone photosensible dans ladite zone de mémoire intermédiaire, puis, par l'intermédiaire dudit registre de lecture (6), le transfert de ladite pluralité d'images de ladite zone de mémoire intermédiaire (5) dans lesdits moyens de mémoire extérieurs (10,11) ; et
. commande la répartition desdites images dans lesdits moyens de mémoire extérieurs (10,11).

2 - Senseur opto-électronique à transfert de charges selon la revendication 1,
caractérisé en ce qu'il comporte une unité de traitement extérieure (8), incorporant lesdits moyens de mémoire extérieurs (10,11) et engendrant les paramètres d'acquisition desdites images, paramètres que ladite unité de traitement extérieure (8) adresse audit séquenceur (13).

## Patentansprüche

1. Optoelektronischer Vielfeldsensor mit Ladungsübertragung bestehend aus einem
 − optischen System (1) zum Bilden optischer Abbildungen;
 − einem photosensiblen Matrixdetektor mit Ladungsübertragung (3), der eine photosensible Zone (4), die aus mehreren Zeilen photosensibler Elemente besteht, die vom optischen System (1) angestrahlt werden, und von der elektrische Abbildungen durch Integration der elektrischen Ladungen gebildet werden, die durch die von den photosensiblen Elementen empfangenen Photonen erzeugt werden, eine Zwischenspeicherzone (5), in die die in der photosensiblen Zone (4) enthaltenen Abbildungen übertragen werden, und ein Leseregister (6) aufweist, in das die Abbildungen der Zwischenspeicherzone (5) übertragen werden, wobei das Leseregister (6) ein serielles Videosignal erzeugt, das die von der photosensiblen Zone empfangenen Abbildungen darstellt,
 − Speichermittel (10, 11) außerhalb vom Matrixdetektor (3) und
 − einem Folgeschalter (13), von dem die Erfassung der elektrischen Abbildungen durch die photosensible Zone (4) gesteuert wird und der befähigt ist, die Abbildübertragungen zwischen der photosensiblen Zone (4) und der Zwischenspeicherzone (5), zwischen der Zwischenspeicherzone (5) und dem Leseregister (6) und zwischen dem Leseregister (6) und den Speichermitteln (10, 11) zu regeln, dadurch gekennzeichnet, daß das optische System (1) ein Mehrfachsystem und befähigt ist, auf der photosensiblen Zone (4) eine Vielzahl von nebeneinanderliegende Abbildungen zu bilden, die unterschiedlichen und/oder übereinanderliegenden optischen Feldern angehören und daß
 − der Folgeschalter (13) die gleichzeitige Erfassung mehrerer Abbildungen durch die photosensible Zone, die Übertragung dieser Vielzahl von derart von der photosensiblen Zone erfaßten Abbildungen in der Zwischenspeicherzone und hiernach über das Leseregister (6) die Übertragung der Vielzahl von Abbildungen der Zwischenspeicherzone (5) in die externen Speichermittel (10, 11) und die Zu- oder Aufteilung der Abbildungen in den externen Speichermitteln (10, 11) steuert.

2. Optoelektronischer Vielfeldsensor mit Ladungsübertragung nach Anspruch 1, dadurch gekennzeichnet, daß er eine externe Bearbeitungseinheit (8) aufweist, in der die externen Speichermittel (10, 11) miteinbezogen sind und die die Parameter des Erfassens der Abbildungen erzeugt, die von der externen Bearbeitungseinheit (8) an den Folgeschalter (13) adressiert werden.

## Claims

1. Opto-electronic CCD sensor, comprising :
 − an optical system (1) for forming optical images ;
 − a photosensitive CCD matrix detector (3) comprising :
 a photosensitive zone (4) constituted by a plurality of lines of photosensitive elements illuminated by said optical system (1) and forming electrical images by integration of the electrical charges generated by the photons received by said photosensitive elements ;
 an intermediate memory zone (5) in which are transferred said images contained in said photosensitive zone (4) ; and
 a reading register (6) in which are transferred saië images of the intermediate memory zone (5), said reading register (6) generating a series video signal representative of the optical images received by said photosensitive zone ;
 − memory means (10, 11) outside said matrix detector (3) ;and
 − a sequencer (13) controlling the acquisition of said electrical images by said photosensitive zone (4) and capable of governing the transfers of images between said photosensitive zone (4) and said intermediate memory zone (5), between said intermediate memory zone (5) and said reading register (6) and between said reading register (6) and said memory means (10, 11), characterized in that:
 − said optical system (1) is multiple and is capable of forming on said photosensitive zone (4) a plurality of juxtaposed images belonging to different and/or superposed optical fields; and
 − said sequencer (13):
 controls the simultaneous acquisition by said photosensitive zone (4) of said plurality of images;
 controls the transfer of said plurality of images thus acquired from said photosensitive zone into said intermediate memory zone, then, via said reading register (6), the transfer of said plurality of images fronl said intermediate memory zone (5) into said outside memory mean (10, 11) ; and
 controls the distribution of said images in said outside memory means (10, 11).

2. Opto-electronic CCD sensor according to claim 1, characterized in that it comprises an outside processing unit (8) incorporating said outside memory means (10, 11) and generating the parameters of acquisition of said images, parameters that said outside processing unit (8) addresses to said sequencer (13).

FIG.1

FIG.2

EP 0 248 687 B1

# FIG.3a

I1 — 4.1
I2 — 4.2
4
5
6
3

# FIG.3b

4
I1
I2
5
6
3

# FIG.3c

4
5
I1
I2
6
3

# FIG.3d

4
5
I1
6
3

# FIG.3e

4
5
3
6